# EUROPEAN PATENT APPLICATION

(11) **EP 0 533 374 A1**
(43) Date of publication of application: **24.03.1993**
(21) Application number: 92307965.1
(22) Date of filing: 02.09.1992
(51) Int. Cl.: G06F 12/08

(54) **Cache memory system**

(30) Priority: 18.09.1991 US 761584
(71) Applicant: AT&T GLOBAL INFORMATION SOLUTIONS INTERNATIONAL INC., Dayton, Ohio 45479 (US)
(72) Inventor: Walrath, Craig A., Easley, SC 29642 (US); Hoevel, Lee W., Dayton, OH 45419 (US); Young, Randolph G., Simpsonville, SC 29681 (US)
(74) Representative: Robinson, Robert George

(57) **Abstract**

A cache memory (16,46,66,110) only stores writes to a data line and not reads. The cache memory (16,46,66,110) does not respond to a read hit directly. Instead, all reads from its associated processor (12,42,62,102) are guided to main memory (20,50,70,120) which supplies the data line corresponding to the read request. If the cache memory (16,46,66,110) has locally stored data corresponding to all or part of the data line read which has been modified, then the modified data is merged with the data from the main memory (20,50,70,120) and sent to the associated processor (12,42,62,102).

## Description

The invention relates to cache memory systems.

Cache memories were originally added to computer systems to decrease processor read and write access times. By studying processor accessing patterns, it was found that if a memory address is accessed, there is a substantial probability that the next memory address accessed will be another address that is closely related to the previous memory address. The substantial probability occurs because data operands and machine instructions are often organized and stored in sequential blocks in main memory. If a processor is accessing data or instructions within one block, it is likely that a subsequent access will be made to that block. As a result of this likelihood, when a non-cached address is accessed, the processor would retrieve a multiword line or an entire block that the address is associated with and store the line or the block in its cache memory.

One type of cache memory that is commonly used to improve processor access times is the write-through cache. This type of cache connects to a processor bus somewhere between the processor and the system bus which connects the processor to main memory. The cache memory is typically located as near to its processor as possible. Connected in this manner, this type of cache memory monitors each access that the processor makes to main memory. If a the data or instruction that is being accessed is currently stored in the cache memory, the cache memory will complete the access by supplying the data or instruction addressed by the processor from its store. In this manner, an access from the processor, through the system bus backplane to main memory and the return of the data or instruction, assuming the access is a read, is saved by the presence of the cache memory.

If the access is a read operation by the processor for data or instructions that are not stored in cache memory, the processor or some other memory accessing device reads the block in which the data or instructions are stored from main memory and stores this block in the cache memory. The data or instruction may subsequently be read from the cache memory.

If the access is a write operation by the processor to an address location data or instructions that are not stored in cache memory, the processor or some other memory accessing device writes the data or instruction to the cache memory and also writes the data or instructions to main memory.

The write-through cache memory is an excellent choice for single processor systems because cache memory and main memory are guaranteed to be data coherent. However, since each write goes out over the system bus to main memory, write traffic on the system bus is not reduced by a write-through cache memory arrangement. Furthermore, for systems having multiple processors and caches, the accesses required to keep data consistent between the main memory and the multiple cache memories increases the system bus traffic considerably. As a result, the data capacity of the system bus often become the limiting factor for computer systems that have multiple processors with multiple write-through cache memories.

It is an object of the present invention to provide a method for operating a computer system employing cache memory means which enables high data throughput to be achieved in a simple and inexpensive manner.

Therefore, according to one aspect of the present invention, there is provided a method of operating a computer system including a main memory, processing means and cache memory means, and a system bus, characterized by the steps of: storing data in said cache memory means only in response to write operations by said processing means; comparing an address of each line of data read by said processing means with addresses of lines of data stored in said cache memory means; if the address of the line of data read by said processing means corresponds to an address of a line that is stored in said cache memory means, identifying each byte within the read line of data that has been modified and merging each modified byte into the line of data read from said main memory as it is returned to said processing means if the address of the line of data read by said processing means does not correspond to an address of any line that is stored in the cache memory means, returning the line of data to said processing means without merging and without storing the line of data in said cache memory means.

It will be appreciated that a method according to the present invention enables high data throughput to be achieved since fewer bus communications are effected than with write-through caches, for example.

According to another aspect of the present invention, there is provided a cache memory system including a main memory processing means and cache memory means, characterized by comparing means adapted to compare a read by said processing means to a main memory line address with an address and a cache tag stored within said cache memory means to determine if a line of data stored in said cache memory means has a more recent copy of a byte of data than a corresponding line of data stored in said main memory; merging means adapted to merge the more recent copy of a byte of data into the line of data that is returned from said main memory in response to the read to the main memory line address and to send the merged line of data to the processing means; and intercepting means adapted to intercept a line of data to be written to any main memory line address by said processing means to store said line of data in said cache memory means.

Embodiments of the invention will now be described by way of example, with reference to the accompanying drawings, in which:-
Fig. 1 is a block diagram of a single processor computer system connected to a write cache and a system bus, according to one embodiment of the invention.
Fig. 2 is a block diagram of a single processor computer system connected to a first level cache memory, a write cache memory, and a system bus according to another embodiment of the invention.
Fig. 3 is a block diagram of a multiple processor computer system connected to multiple write cache memories that are further connected to a system bus, which is a multiple processor version of the embodiment shown in Fig. 1.
Fig. 4 is a block diagram of a multiple processor computer system connected to multiple write-through cache memories, multiple write cache memories to a system bus, which is a multiple processor version of the embodiment shown in Fig. 2.
Fig. 5 is a partial block diagram of a variation of the multiple processor computer system shown in Fig. 4 where each processor has its first level cache as part of its integrated circuit chip.

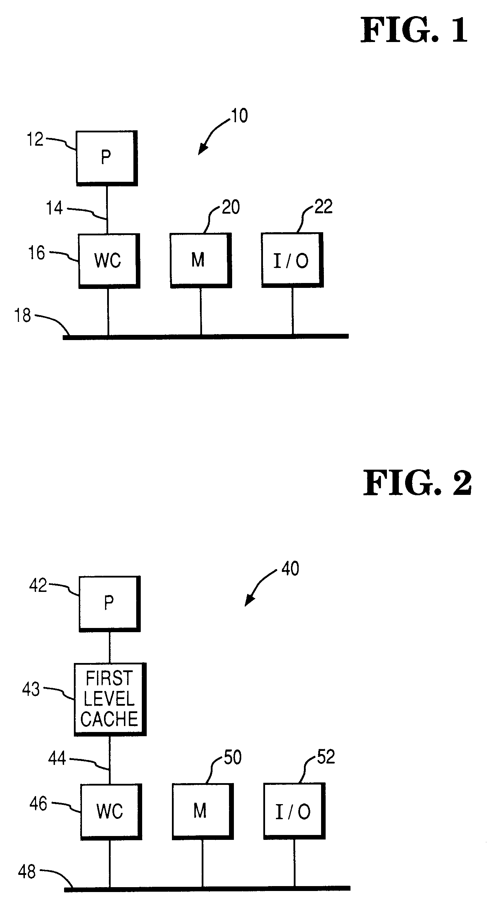

Referring to Fig. 1, there is shown a block diagram a computer system 10 in accordance with one embodiment of the present invention. The computer system 10 has a processor 12. Processor 12 is connected by a bi-directional processor bus 14 to a write cache memory 16. Write cache memory 16 is connected to a system bus 18. Besides being connected to write cache memory 16, system bus 18 is connected to main memory 20 and to Input/Output bus 22.

Main memory 20 is a large capacity RAM store, such as a number of RAM chips (not shown) connected together in an array. Main memory 20 may also include a ROM portion to provide non-volatile storage for some operating instructions of the computer system 10. Such operating instructions provide, among other things, for the input of blocks of data and instructions loaded into the main memory 20 from the Input/Output bus 22 which is further connected to mass storage peripherals, such as disk drives, tape drives or other mass storage device (not shown). After such loading, main memory 20 has blocks of data operands and instructions stored therein.

Initially, processor 12 processes data operands from the main memory 20 according to instructions received from the main memory 20 because write cache memory 16 initially is empty. Furthermore, write cache memory 16 provides a path for all read operations from the processor 12 to main memory 20. Data operands and instructions are not stored into the write cache memory 16 as part of a read operation or in response to a read operation by the processor 12. Therefore, initially the write cache memory 16 does not take part in the data processing.

After the initial processing, the processor 12 will have some data operand or instruction to write to main memory 20 by a write operation. This data or instruction will be written to a main memory address, but the write operation will be intercepted by the write cache memory 20 and stored therein. Interception and storage in the write cache memory 16 replaces transmission of the data operand or instruction over system bus 18 and storage in main memory 20.

Write cache memory 16 stores the write data in multiple byte units called lines. A data block consists of one or more lines. Main memory 20 stores data as lines, also. Each line has either 16 or 32 bytes contained in it. The 16 byte line, i.e. a 128 bit line, is the default line size and 32 byte line, i.e. a 256 bit line, is an optional setting for systems where the system bus 18 has at least 64 data conductors. Without write cache memory 16, an alteration of only one bit of a line that is followed by a write of that line would occasion the writing of the entire line to main memory 20. With write cache memory 16 any alteration within a line that is followed by a write of that line to memory will go to a corresponding line in write cache memory 16.

A write by processor 12 to a line that is not stored in write cache memory 16, often referred to as a write miss, causes write cache memory 16 to perform a write-for-ownership operation to main memory 20. A write-for-ownership operation enters write cache 16 as the owner of the line in the line status table (LST) in main memory 20. The LST will then indicate that write cache memory 16 is the owner of that line until such ownership is relinquished. Such LST entries become more important for multiple processor systems, as will be explained below.

In time, write cache memory 16 will become filled and it will not be able to store the write of a next line of data operands or instructions. For such an occurrence, write cache memory 16 uses a least recently used (LRU) replacement routine in which the least recently used line is invalidated and replaced with the most recent line that is written. Write cache memory 16 writes the least recently used data line back to main memory 20. At this point, the LST is updated such that write cache memory 16 is no longer listed as the current owner of the data line. The write cache protocol also requires a write to main memory 20 if another processor or controller, for example a I/O controller (not shown) on I/O bus 22, attempts to read the line from main memory 20. In such a case, a main memory controller (not shown) will determine from its line status table that write cache memory 16 owns the line and will instruct write cache 16 to write the accessed line back to main memory 20. In this manner, a coherent copy of each line of data is provided whenever it is needed by another processor or controller.

If a line is only changed once and then written to main memory, not much is gained by the presence of write cache memory 16, in fact some extra processing time may be used by the write-for-ownership operation upon the initial allocation. If a data line is revised 20 times before the LRU replaces it, however, then 19 time consuming write operations across the system bus 18 have been avoided. This is one advantage of a write cache memory.

Referring now to Fig. 2, a second embodiment of the invention shall be described. In Fig. 2, a computer system 40 has a processor 42 connected to a first level cache memory 43. First level cache memory 43 is connected by a high speed parallel bus 44 to a write cache memory 46, which is a second level cache memory with respect to processor 42. Write cache memory 46 is substantially identical to write cache memory 16 shown in Fig. 1. Write cache memory 46 is connected to a system bus 48. The system bus 48 connects to a main memory 50 and an Input/Output bus 52, as well as, the write cache memory 46.

If the first level cache memory 43 is a write-through type of cache memory, write cache memory 46 is very effective in reducing write traffic on system bus 48. For a write-through-cache memory, the same line that is stored in the write-through cache memory is also written through to main memory. Write cache memory 46 substantially reduces system bus traffic by intercepting and locally storing data operands and instructions from the first level cache memory 43 in the second level write cache memory 46.

The protocol for operating write cache memory 46 is substantially the same as that for operating write cache memory 16 described above in regard to Fig. 1.

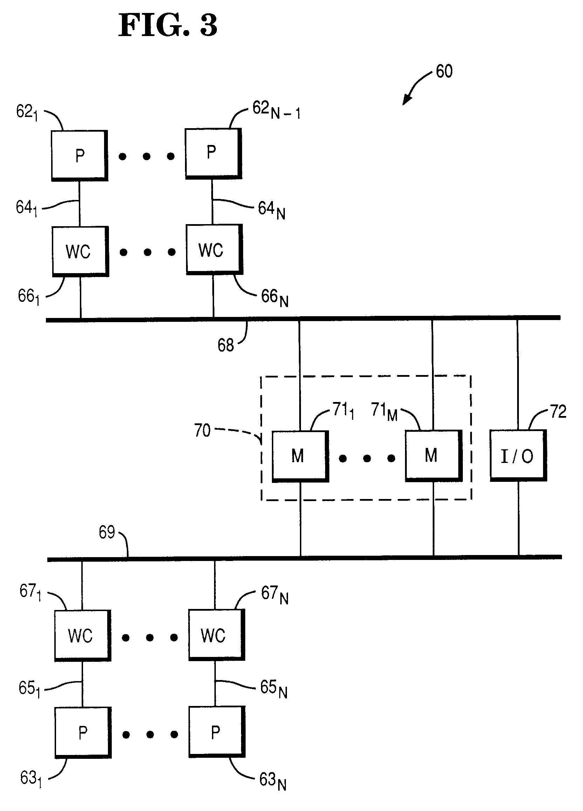

Referring now to Fig. 3, a multiprocessor computer system 60 is shown. Computer system 60 has processors 62₁-62_{N}, each connected to a respective processor bus 64₁-64_{N} and processors 63₁-63_{N} each connected to respective processor bus 65₁-65_{N}. Processor buses 64₁-64_{N}, 65₁-65_{N} are respectively connected to write cache memories 66₁-66_{N}, 67₁-67_{N} each of which is substantially identical to write cache memories 16 and 46 described previously.

Write cache memories 66₁-66_{N}, 67₁-67_{N} are connected essentially in parallel to system buses 68 and 69 respectively. System buses 68, 69 are also connected to dual ported main memory 70, which is made up of M interleaved portions 71₁-71_{M}. The M interleaved portions 71₁-71_{M} help to speed up memory accesses since, for example, one of the processors 62₁-62_{N} on system bus 68 can access one of the memory interleaved portions while another of the processors 63₁-63_{N} on system bus 69 is accessing another interleaved portion. A dual ported Input/Output bus 72 is connected to system buses 68, 69 and provides access for peripheral devices as Input/Output buses 22 and 52 in Figs. 1 and 2.

System buses 68 and 69 are substantially identical and they are symmetric with respect to dual ported memory 70 and dual ported I/O bus 72. Therefore, for the sake of brevity only the operation of system bus 68 and processors 62₁-62_{N} with their respective write cache memories 66₁-66_{N} will be described in detail, but it will be appreciated that the description will also pertain to system bus 69 and processors 63₁-63_{N} with respective write cache memories 67₁-67_{N}.

It will be appreciated that the computer system 60 with multiple processors 62₁-62_{N} and interleaved main memory 70 have multiplied the data processing and storing capabilities manifold over the single processor computer systems 10 and 40 shown in Figs. 1 and 2. However, it is also appreciated that system bus 68 has not undergone a multiplication of capabilities. Thus, to provide for a scaling-up of processor and memory assets as shown in Fig.3, traffic on system bus 68 must be reduced as much as possible. Write cache memories 66₁ 66_{N} provide the required reduction in system bus traffic by intercepting many of the writes and keeping these writes off of the system bus 68 until there is a need to write the encached data operands and instructions to the main memory 70 for data coherency purposes, such as when a portion of a computer program is completed. By waiting until a write to main memory 70 is needed, such as occurs at the completion of a portion of a program, the resulting operands and instructions, multiple writes within a line are combined and only the final resulting data operands and instructions are written to main memory 70. This prevents the transmission of intermediate writes to the line across the system bus 68.

Data operands and instructions are normally written to main memory 70 at the end of each computer program portion as described above, either by instruction within the program portion or by default upon LRU replacement. The other common occasion for writing a line of data back is a request for the data line from another processor or controller, but these should be avoided whenever possible in order to reduce traffic on system bus 68.

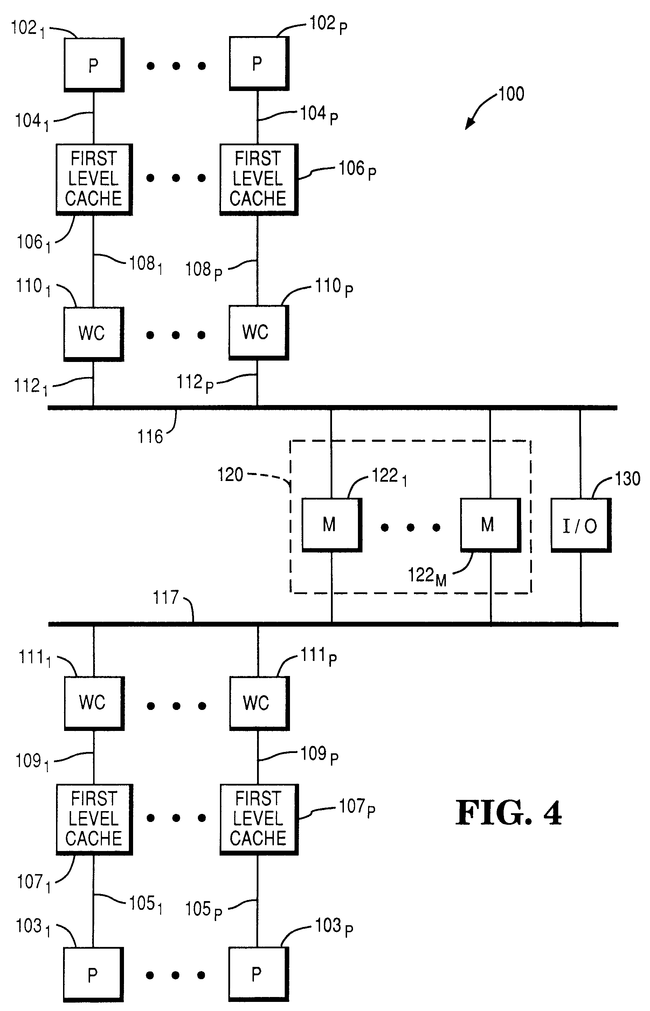

Referring now to Fig. 4, another embodiment of the invention will be described. A computer system 100 is shown that has multiple processors 102₁-102_{P}, 103₁-103_{P}. Processors 102₁-102_{P} are connected by respective processor buses 104₁-104_{P} to respective first level cache memories 106₁-106_{P}, and processors 103₁-103_{P} are connected by respective processor buses 105₁-105_{P} to respective first level cache memories 107₁-107_{P}. Each of the first level cache memories 106₁-106_{P}, is substantially the same as first level cache memory 43 shown in Fig. 2. Each of the first level cache memories 106₁-106_{P}, 107₁-107_{P} is connected to a respective high speed parallel bus 108₁-108_{P}, 109₁-109_{P}. Each of the high speed parallel buses 108₁-108_{P} is connected to a respective write cache memory 110₁-110_{P}, 111₁-111_{P}. Each of the write cache memories 110₁-110_{P} is connected by a respective high speed parallel cache bus 112₁-112_{P} to a high speed parallel system bus 116. Similarly, each of the write cache memories 111₁-111_{P} is connected by a respective high speed parallel cache bus 113₁-113_{P} to a second high speed parallel system bus 117.

System buses 116 and 117 are substantially identical and they are symmetric with respect to dual ported memory 120 and dual ported I/O bus 130. Therefore, for the sake of brevity only the operation of system bus 116 and processors 102₁-102_{P} with their respective first level cache memories 106₁-106_{P} and write cache memories 110₁-110_{P} will be described in detail, but it will be appreciated that the description will also pertain to system bus 117 and processors 103₁-103_{P} with their respective first level cache memories 107₁-107_{P} and write cache memories 111₁-111_{P}.

Main memory 120 may be M-way interleaved, for example it may be four way interleaved. In such a case, main memory 120 will have M interleaved portions 122₁-122_{M} and each portion 122₁-122_{M} is connected by its own memory bus 124₁-124_{M} to system bus 116.

The multiple processor computer system 100 that has a two level cache memory arrangement shown in Fig. 4 operates substantially the same as the single processor computer system 40 shown in Fig. 2, but it must perform the additional function of maintaining coherency of data operands and instructions among the multiple first level cache memories 106₁-106_{P} and the multiple write cache memories 110₁-110_{P}, and the main memory 130.

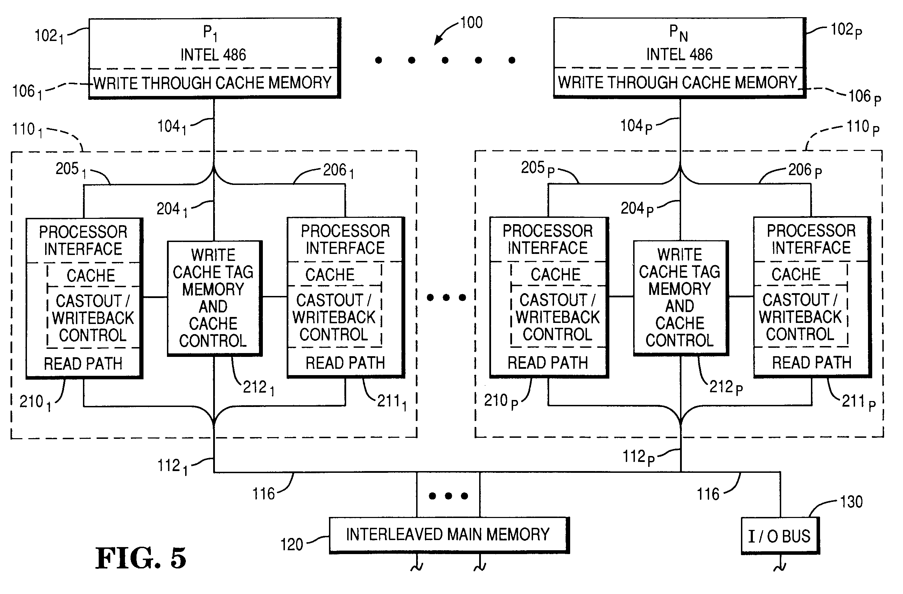

If the first level cache memories 106₁-106_{P} are of the write-through type described previously and if they and their buses 104₁-104_{P} are integrated into their respective processors 102₁-102_{P}, then the top half of Fig. 4 is shown in Fig. 5.

Referring now to Fig. 5, a specific embodiment of the present invention will be described. The half of the dual bus computer system 100 has multiple processors 102₁-102_{P}, which are microprocessor type 80486 by Intel Corporation of Santa Clara, California. Each processor 102₁-102_{P} has an on-chip write-through cache memory 106₁-106_{P} as its first level cache memory.

Each processor 102₁-102_{P} with its on-chip first level cache memory 106₁-106_{P} connects via a respective high speed parallel bus 108₁-108_{P} to a respective write cache memory 110₁-110_{P.} Each write cache memory 110₁-110_{P} is made up of a set of three separate integrated circuits which operate together as a second level write cache memory, as will be explained below.

The write cache memories 110₁-110_{P} are connected by high speed parallel buses 112₁-112_{P} to a high speed system bus 116. The high speed system bus 116 also connects to a main memory 120 via a group of M memory buses 124₁-124_{M}. Main memory 120 is M-way interleaved and each of the memory buses 124₁-124_{M} is connected to a respective portion of the interleaved main memory 120. Further, the system bus 116 is also connected to at least one Input/Output bus 130, such as International Business Machine's Micro Channel Architecture bus or an Extended Industry Standard Architecture bus.

Preferably, write cache memories 110₁-110_{P} are 1kbyte, 2 way set associative cache memories that have selectable line sizes of 128 bits or 256 bits. Depending on the line size selection, each write cache 110₁-110_{P} will store either 64 lines with 128 bits per line or 32 lines with 256 bits per line. The line size is selected according to a logic state of a control line of the system bus 116. The line size is selected according to the rule that if any device in the computer system 100 utilizes a 256 bit line size, then the 256 bit line size will be selected for the entire computer system. Otherwise, a default line size of 128 bits per line will be selected for the computer system 100. A least recently used (LRU) replacement algorithm is used to decide which lines will be castout, i.e. written and stored in main memory 120, after a write miss to one of the cache memories 110₁-110_{P} that has all of its storage utilized.

As mentioned previously, write cache memories 110₁-110_{P} may be implemented as three application specific integrated circuits (ASICs): write cache data (WCD) ASICs 210₁-210_{P} and 211₁-211_{P}; and write cache bus interface control (WCBIC) ASICs 212₁-212_{P}, respectively. The WCD ASICs 210₁-210_{P} and 211₁-211_{P} are identical, with each write cache memory 110₁-110_{P} having a respective pair of the WCD ASICs 210₁-210_{P}. WCBIC ASICs 212₁-212_{P} act as bus interfaces for their respective processors 102₁-102_{P}, and they also store the cache tags of their respective write cache memory 110₁-110_{P} that are used to determine which processor memory accesses are hits and which are misses. Each write cache memory 110₁-110_{P} uses a pair of WCD ASICs 210₁-210_{P} and 211₁-211_{P} in order to reduce stub lengths and transmission delays of the high speed processor buses 108₁-108_{P}. With this arrangement, each 32 bit processor data word on each processor bus 108₁-108_{P} is divided in two 16 bit data slices. The resulting 16 bit data slices are transmitted via buses 205₁-205_{P} to their respective WDC ASICs 210₁-210_{P}, and via buses 206₁-206_{P} to their respective WCD ASICs 211₁-211_{P}.

For the computer system shown in Fig. 5, bytes 0,1 are paired together to form the first 16 bit data slice and bytes 2,3 are paired together to form the second 16 bit data slice of a 32 bit word. Those skilled in the art will appreciate that the data may be paired in any order as long as the byte enables and data parity signals are matched accordingly. Thus, the write data that is stored in each write cache memory 110₁-110_{P} is actually stored as pairs of bytes in respective pairs of WCD ASICs 210₁-210_{P} and 211₁-211_{P}, and the cache tags are stored in a respective WCBIC 212₁-212_{P}.

### OPERATION OF A PREFERRED EMBODIMENT

Each write cache memory 110₁-110_{P} is a 1 kbyte, in-line cache memory that only stores writes from its respective processor 102₁-102_{P}. A read access to memory from one of the processors 102₁-102_{P} is read 'around', i.e. the read access is forwarded along a connecting path to main memory 120 if there is a cache hit or miss, its respective write cache memory 110₁-110_{P} and reads the line of data operands or instructions directly therefrom. In the event that the line being read by a processor 102₁-102_{P} is currently stored in its respective write cache memory 110₁-110_{P}, i.e. a cache hit, the line of data operands or instructions that are returned by main memory 120 will be merged with any modified data in the write cache memory for that line before the line of data operands or instructions are sent to the reading processor 102₁-102_{P}.

Data coming out of any of the processor 102₁-102_{P} is routed to a respective pair of WCD ASICs 210₁-210_{P}, 211₁-211_{P} and a respective WCBIC ASIC 212₁-212_{P}. Each WCBIC ASIC 212₁-212_{P} decodes the data address to determine the data's destination, for example main memory 120, I/O bus 130, or another processor. According to the data's destination and its internally stored cache tags, each WCBIC determines how to control its respective WCD ASICs 210₁-210_{P}, 211₁-211_{P}, to store, merge, or provide a path for the data.

The WCD ASICs include four main functional areas. These four functional areas are: processor interface, cache store, castout-and-writeback control, and read path control.

The WCD processor interface receives incoming write data and queues this data up while its associated WCBIC determines the destination of the data. There are two levels of data posting involved here. The first posting level latches data directly from its processor bus 104₁-104_{P}. The second level holds the data until it is either stored in one of its write cache memory 210₁-210_{P}, and 211₁-211_{P} or written to the system bus 116. The third, fourth, and fifth least significant processor address lines 4,3,2 are also clocked through along with the respective data bytes. If the data is eventually cached, these address lines are used to select a memory storage position for it in the cache store.

The cache store includes the actual storage cells where the data bits of each line are stored. For high speed operation, these are static RAM cells. Each WCD ASIC 210₁-210_{P}, 211₁-211_{P} has 512 bytes of static RAM storage space (excluding parity and byte enables) that, depending on the cache line size, can be configured as a 64 line cache memory if a 128 bit line size is used, or as a 32 line cache memory if a 256 bit line size is used. Despite the configuration, each line in the cache store contains the data bits of the line, a parity bit for each byte in the line, and an enable bit for each byte in the line. Only writes to a main memory address will be stored in the cache store, writes to I/O addresses or similar addresses will not be stored in any cache store.

There are two control functions involved in order to actually write data into the cache store. The first one uses signals from the WCBIC to determine if there is a write cycle to be done. It performs two different types of write cycles: write allocates and write hits. On a write allocate, a new line is put into the cache. A system bus cycle must occur on each write allocate to gain ownership of the line in the LST in main memory 120. Upon immediate completion of the cycle, the local cache copy and main memory 120 for that particular line are the same. Now that the local write cache memory 110₁-110_{P} has ownership of that line, write hits can be rapidly processed. A hit is a write to a line that is already owned in the cache memory. Writes can be as small as one byte or as large as the current cache line size.

There is a second unique control function for each of the individual static RAM cells (not shown). This control function looks at the byte enables, and the previously mentioned least significant address lines to determine where in the cache store the write is to be written, which double word, which byte(s),etc.

The castout/writeback function is used for writing data to the system bus 116 for either castouts or writebacks. The castout/writeback function obtains the data from its cache store and controls the burst sequence of this data onto the system bus 116.

On a typical write allocate and writeback operation, the data line that is being written into a write cache memory 110₁-110_{P} is replacing a data line that is currently stored there. For such a replacement, the current cache data line is transferred to a writeback buffer and then the incoming data line is allocated to the vacated space in the write cache memory 110₁-110_{P}. Then the write cache memory writes the data line from its writeback buffer to main memory 120, where the corresponding line location and the corresponding LST entry are updated. After this writeback, the line is not owned.

As its name implies, the castout/writeback function is also used to handle castouts. In a multiprocessor computer system, cache coherency must be assured. To keep data coherency among several caches, any of the write cache memories 110₁-110_{P} may be instructed by main memory 120, where the LST for all of the cache memories is maintained, to castout a data line to main memory 120 because another processor 102₁-102_{P} wants to read a line that is currently owned by that cache memory. When a data line held in one of the write caches 110₁-110_{P} is instructed to be castout, the WCBIC 212₁-212_{P} thereof will send the correct address of the data line followed by a control signal that instructs its respective pair of WCD ASICs 210₁-210_{P}, 211₁-211_{P} to write the indicated data line into a buffer allocated for castouts.
From this buffer, the data line then is written back to main memory 116.

All castouts commands to the write cache memories 110₁-110_{P} are castout-invalidates, because the cache coherency protocol does not provide for castout-shared cycles. There are no castout-shared cycles because the write cache memories 110₁-110_{P} do not share ownership of data.

The read path function assures that read main memory accesses coming out of each of the processors 102₁-102_{P} will always go to main memory 120. While waiting for the read data to come back from main memory 120, the WCBIC determines whether or not the read is a hit to any data line stored in its respective write cache memory 110₁-110_{P}. If the read is a miss, the data transmitted from main memory 120 is simply routed around the respective write cache memory 110₁-110_{P}, directly to its processor 102₁-102_{P}. If the read is a hit, the dirty, i.e. modified, data stored in the respective write cache memory 110₁-110_{P} is merged with the data line transmitted back from main memory 120. The merged data line is sent on to its respective processor 102₁-102_{P}.

Each of the write cache memories 110₁-110_{P} is connected by a respective bus 112₁-112_{P} in parallel to the system bus 116. The remainder of the computer system 100 with respect to the system bus 116, main memory 120, and Input/Output bus 130 interact with the processors 102₁-102_{P} to process operands and instructions into useful results, but their operation is beyond the scope of the present invention.

Thus, it will now be understood that there has been disclosed a write cache memory apparatus and a method for operating a cache memory which provides cache storage only for data that is accessed by a write from its respective processor. Although the present invention may be used with any type of processor, it is very advantageous when used with a processor that has an on-chip write-through cache memory. While the invention has been particularly illustrated and described with reference to preferred embodiments thereof, it will be understood by those skilled in the art that various changes in form, details, and applications may be made therein, such as having a different number of processors on one of the dual system buses as on the other system bus.

## Claims

1. A method of operating a computer system including a main memory (20,50,70,120), processing means (12,42,62,102) and cache memory means (16,46,66,110), and a system bus (18,48,68,116), characterized by the steps of: storing data in said cache memory means (16,46,66,110) only in response to write operations by said processing means (12,42,62,102); comparing an address of each line of data read by said processing means (12,42,62,102) with addresses of lines of data stored in said cache memory means (16,46,66,110); if the address of the line of data read by said processing means (12,42,62,102) corresponds to an address of a line that is stored in said cache memory means (16,46,66,110), identifying each byte within the read line of data that has been modified and merging each modified byte into the line of data read from said main memory (20,50,70,120) as it is returned to said processing means (12,42,62,102); if the address of the line of data read by said processing means (12,42,62,102) does not correspond to an address of any line that is stored in the cache memory means (16,46,66,110), returning the line of data to said processing means (12,42,62,102) without merging and without storing the line of data in said cache memory means (16,46,66,110).

2. A method according to claim 1, chracterized by the steps of: if the address of the line of data written by said processing means (12,42,62,102) corresponds to an address of a line that is stored in said cache memory means (16,46,66,110), updating the line of data and marking the bytes within the line that are modified as modified data, whereby write operations from said processing means (12,42,62,102) to said main memory (20,50,70,120) across said system bus (18,48,68,116) are suppressed until either a cast out operation or a write back operation with respect to said data line occurs.

3. A method according to claim 2, characterized by the steps of: if the address of the line of data written by said processing means (12,42,62,102) corresponds to an address of a line that is not stored in said cache memory means (16,46,66,110), allocating a line for storage of the data, storing the line of data in said cache memory means (12,42,62,110) and marking the bytes within the line that are modified as modified data, whereby subsequent write operations from said processing means (12,42,62,102) to said main memory (20,50,70,120) across said system bus (18,48,68,116) are suppressed until either a cast out operation or a write back operation with respect to said data line occurs.

4. A method according to any one of the preceding claims wherein said processing means includes a processing device (42,102), characterized by the step of providing a first level cache (43,106) coupled between said processing device and said cache memory means (46,110).

5. A cache memory system including a main memory (20,50,70,120) processing means (12,42,62,102) and cache memory means (16,46,66,110), characterized by comparing means adapted to compare a read by said processing means (12,42,62,102) to a main memory line address with an address and a cache tag stored within said cache memory means (16,46,66,110) to determine if a line of data stored in said cache memory means (16,46,66,110) has a more recent copy of a byte of data than a corresponding line of data stored in said main memory (20,50,70,120); merging means adapted to merge the more recent copy of a byte of data into the line of data that is returned from said main memory (20,50,70,120) in response to the read to the main memory line address and to send the merged line of data to the processing means (16,46,66,110); and intercepting means adapted to intercept a line of data to be written to any main memory line address by said processing means (12,42,62,102) to store said line of data in said cache memory means (16,46,66,110).

6. A cache memory system according to claim 5, characterized by means adapted to determine and replace a least recently used line of data stored in said cache memory means (16,46,66,110) with the most recently intercepted line of data written by said processing means (12,42,62,102) if said cache memory means (16,46,66,110) is full.

7. A cache memory system according to claim 6, characterized by means adapted to store said least recently used line of data back into said main memory (20,50,70,120) in a location associated with its main memory ine address.

8. A cache memory system according to any one of claims 5 to 7, characterized in that said cache memory means (16,46,66,110) stores each line of data as two half lines in two cache memory arrays (210,211).

9. A cache memory system according to any one of claims 6 to characterized in that said processing means includes a processing device (42,102) and a first level cache (43,106) connected between said processing device (42,102) and said cache memory means (46,110).
